# EUROPEAN PATENT APPLICATION

(11) **EP 3 112 660 A1**
(43) Date of publication of application: **04.01.2017**
(21) Application number: 15174642.7
(22) Date of filing: 30.06.2015
(51) Int. Cl.: F02M 55/00, F02M 37/00, F02M 55/02, F02M 59/10, F16L 55/04

(54) **A LIQUID DELIVERY SYSTEM, IN PARTICULAR A FUEL SYSTEM, A LIQUID SUPPLY LINE AND A MOTOR VEHICLE INCORPORATING THE LIQUID DELIVERY SYSTEM**

(71) Applicant: Delphi International Operations Luxembourg S.à r.l., 4940 Bascharage (LU)
(72) Inventor: McCrindle, Christopher John, Kent ME19 4FJ (GB)
(74) Representative: Delphi France SAS

(57) **Abstract**

A liquid delivery system is described, in particular in the form of a fuel delivery system. The delivery system including a reciprocating pressure pump having an inlet valve connected to a liquid supply line, with the reciprocating pump being adapted to take in the liquid from the liquid supply line through the inlet valve and deliver it under pressure through an outlet valve. The liquid supply line has, at least an elongate part with an initial cross sectional shape which differs from a circular cross section. The elongate part is adapted to change its cross sectional shape and area to a shape more closely approximating a circular cross section when liquid present therein is subjected to pressure peaks resulting from operation of the reciprocating pressure pump and especially of the inlet valve thereof. A liquid supply line and a liquid return line are also claimed.

## Description

The present invention relates to a liquid delivery system including a reciprocating pressure pump having an inlet valve connected to a liquid supply line, the reciprocating pump being adapted to take in liquid from the liquid supply line through an inlet valve and deliver it under pressure through an outlet valve. The present invention also relates to a liquid supply line and to a liquid return line. It also relates to a motor vehicle incorporating the liquid delivery system. The liquid delivery system can be a fuel delivery system, but is not restricted to such systems and can have general use in hydraulic systems of diverse kinds.

Reciprocating pumps, particularly single plunger pumps, often have problems filling at higher speeds. This is partly caused by the stop start behavior of the fluid in the liquid supply line or inlet pipe as the inlet valve opens and closes during the pumping cycle. The inertia of the fluid resists the pumping action and gives rise to pressure waves along the liquid supply line. These waves are reflected at both ends and, as the engine speed and thus the pump speed varies, lead to significant variation in pressure at the inlet of the pump. It should be noted that this problem arises both with liquid supply lines which have an open end in the liquid storage tank, from which they draw liquid to supply to the pump, and to liquid supply lines which are fed with liquid by a primary pump feeding liquid to the liquid supply line and, for example, located in or at the liquid storage tank. Low pressure during filling can lead to under filling and cavitation and can mean that the pump does not meet the delivery requirements. Cavitation is worse at higher temperatures due to the fact that vapour pressure increases with higher temperature. Furthermore there is a problem at lower temperatures because the rubber pipes get stiffer so damping is also reduced at lower temperatures. Damping is in any case reduced as pipes become stiffer. Thus a stiffer pipe inherently has less damping capability.

In certain pump configurations this stop start nature can also lead to large pressure fluctuations which, in some cases, can lead to system component damage or life reduction.

It is known to use accumulators/dampers to reduce the magnitude of pressure fluctuations by storing fluid during peak pressures and returning it during the low pressure part of the cycle. The known accumulators and dampers are relatively bulky, which can be problematic in the limited space available in modern engine bays. Moreover, they add cost to the fuel delivery system.

The principal object underlying the present invention is to provide a simple, compact, liquid damping structure which overcomes the problems of pressure fluctuations in the liquid supply line due to operation of the pump and the inlet valve (or otherwise) and which can be manufactures at favorable cost.

In order to satisfy this object there is provided, in a liquid delivery system of the above named kind, an arrangement in which at least an elongate part of the liquid supply line has an initial cross sectional shape which differs from a circular cross section, the elongate part being adapted to change its cross sectional shape and thereby increase in cross-sectional area and having a larger area when liquid present therein is subjected to pressure peaks resulting, for example, from operation of the reciprocating pressure pump, in particular of the inlet valve.

The change in cross sectional state and area from the initial cross-section differing from a circular cross section corresponds to a resilient increase in area of the cross section of the hollow passage within the relevant elongate part of the liquid supply line and thus the volume of the elongate part, leading to the required damping. As the damping is supplied by the relevant elongate part of the liquid supply line there is effectively no additional space required to accommodate the damping function and very little additional cost and complexity for its realization. The designation elongate part does not signify that a physically distinct element is incorporated into the liquid supply line, although this is not excluded, but rather that part of the length of the liquid supply line has the special cross section. It is indeed conceivable that the entire length of the liquid supply line apart perhaps from the end fittings could have the prescribed cross sectional shape.

Thus the proposed design utilizes supply (or return) pipework as an accumulator. It is known that pipes provide a level of accumulation but this is limited by their stiffness (particularly at low temperatures). The initially circular cross section of an inlet pipe in prior art liquid supply lines is good at resisting resilient dilation of the inlet pipe during pressure peaks so that the change in volume of the hollow passage within the inlet pipe due to resilient deformation is low, particularly as the inlet pipe has to be designed to withstand reliably the peak operating pressures. Thus damping is not inherently achieved in prior art liquid supply lines. The reference to "return pipework" recognizes that the damper of the present invention could also be used to attenuate pressure fluctuations in a return line of the system although such pressure fluctuations may have entirely different origins.

In contrast, the present invention recognizes that distorting the pipe from a circular cross-section to an initially non-circular cross sectional shape, such as an elliptical, D-shaped (or other shape), allows the cross sectional area (and hence its volume) to change more easily under pressure changes. Generally the cross sectional shape changes to one more closely approximating a circular cross section.

The reciprocating pressure pump can be one of a single plunger pump, a twin plunger pump, a multi-plunger pump and a rotary piston pump. The pressure fluctuation problem in the inlet line is particularly acute with single plunger pumps, such as can be used with common rail fuel injection systems or with other pressure reservoirs, but can also arise with twin plunger pumps and multi-plunger pumps such as three plunger pumps. It can also arise with rotary plunger pumps. Such twin plunger pumps, multi-. plunger pumps and rotary plunger pumps are frequently used to feed pressurized liquid or fuel reservoirs.

Single plunger pumps are frequently driven by a camshaft of the engine. The aforementioned plunger pumps can be also be driven via a cam driven by a belt drive synchronized with the engine. The type of variable speed drive that is used, normally synchronized with engine speed, is not important. It is the reciprocating action of the plunger which ultimately gives rise to the pressure fluctuations due to opening and closing of the inlet valve.

The liquid delivery system in accordance with the present invention may also include items such as at least one of a filter and a cut-off valve incorporated in said liquid supply line. These items may give rise to pressure wave reflections and thus pressure peaks, but do not affect the basic operation of the invention, but only the pump speed at which the pressure fluctuations occur.

Furthermore, another item which may be provided is an inlet metering valve to restrict the amount of fuel that enters the pumping chamber (deliberately cavitating inlet).

In accordance with the invention at least one of a spill valve and a pressure restricting valve can be associated with the reciprocating pressure pump for returning excess liquid to the liquid storage tank. A spill valve is an electrically (electro-magnetically or piezo-electrically) controlled valve which opens to allow excess fuel to return to the liquid storage tank but closes for a selectable intervals during pump operation to allow an appropriate quantity of fuel to pass to the associated reservoir depending on the demand for pressurized fuel. Accordingly, the reciprocating piston pump only consumes significant drive power when the spill valve is closed and fuel is delivered under pressure to the reservoir and the associated engine. This is much easier than trying to control the volume displaced by the reciprocating pump which remains constant for any particular operating speed. A pressure restricting valve is normally provided in common rail fuel injection systems to limit the pressure in the common rail to a predefined value and achieves this by allowing fuel to return to the liquid storage tank, i.e. to the fuel tank. Thus again the present invention can be readily integrated into known designs of fuel system.

The elongate part of the liquid supply line having a cross sectional shape differing from a circular shape may be accommodated in a resilient holder or clip adapted to increase the elastic loading of the part and thus its resistance to deformation from the initial state. This represents a simple space saving way of controlling the increase in volume and the damping that is achieved.

The liquid supply line, or at least the elongate part thereof, can comprise a rubber material, a synthetic rubber material or a plastic material such as nylon. The foregoing can be molded to the desired initial cross sectional shape, for example by heating and the application of pressure in a correspondingly shaped mold. The materials can also include reinforcing fibers, filaments, fabrics or braids. In addition the elongate part can be made of a metal such as steel.

The elongate part of the liquid supply line can have any suitable length adequate to achieve the required damping. Thus lengths between 100mm and 4000mm and even much longer can be considered. In one example a length of 500mm was found to be expedient.

The present invention is also concerned with a liquid supply line suitable for use in the liquid delivery system of the invention. The invention thus also relates to a liquid supply line of which at least an elongate part has an initial cross sectional shape which differs from a circular cross section, the elongate part being adapted to change its cross sectional shape and thereby increase in cross-sectional area when liquid present therein is subjected to pressure peaks resulting, for example, from operation of the reciprocating piston pump.

The invention will now be explained in more detail by way of example only and with reference to the accompanying drawings in which:
- Fig. 1: shows a schematic illustration of a common rail gasoline or diesel injection system fed by a shaft-driven single plunger pump having a liquid supply line incorporating an elongate part with an initial cross-section differing from a circular cross section as illustrated in Fig. 3A,
- Fig. 2A: shows a cross section of the elongate part of Figs. 1 in an initial elliptical shape adopted when fuel is present at the normal supply pressure,
- Fig. 2B: shows the generally circular cross section of the elongate part of Figs 1 in the presence of pressure peaks,
- Fig. 3A: is a diagram similar to Fig. 2A but showing the additional use of a clip or holder,
- Fig. 3B: is a diagram corresponding to that of Fig. 2B but for the elongate part with clip shown in Fig. 3A,
- Fig. 4A: shows another diagram similar to Fig. 2A but for an elongate part having an initial D-shaped cross section and
- Fig. 4B: shows a diagram similar to Fig. 2B but showing the cross sectional shape of the elongate part of Fig. 4A with a shape more closely approximating a circular cross section in the presence of pressure peaks.

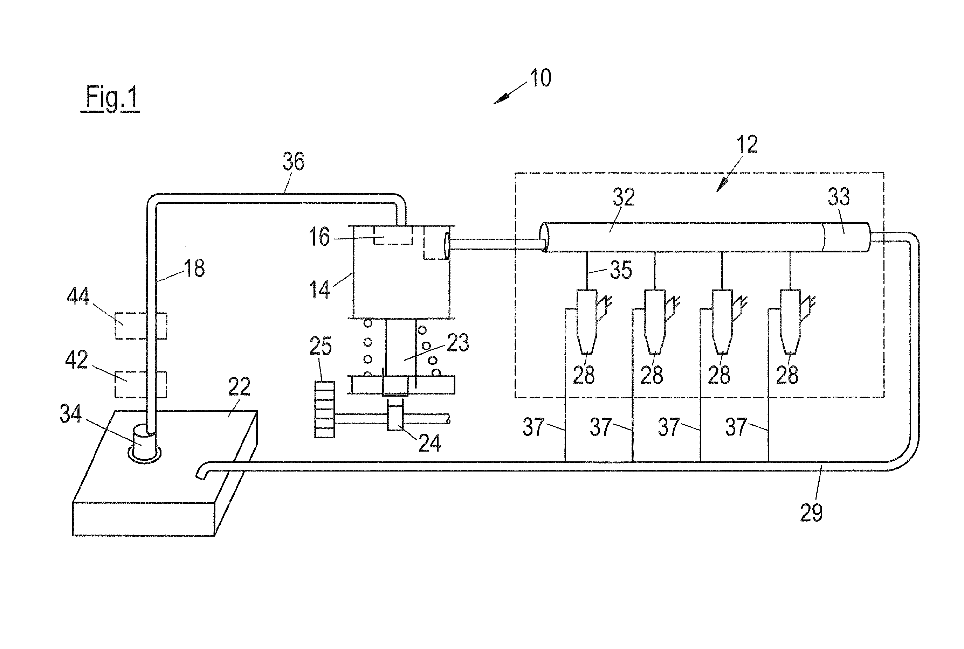

Turning first of all to Fig. 1 there can be seen a liquid delivery system 10 in the form of a fuel delivery system for a gasoline or petrol engine schematically illustrated by the reference numeral 12. In this case the delivery system 10 includes a reciprocating pressure pump 14 having an inlet valve 16 connected to a liquid supply line 18. The liquid supply line 18 includes an elongate part 36 which has an initial cross section differing from a circular shape as will be explained later. The liquid supply line 18, i.e. the fuel line ends either has an open end located within a liquid storage tank, i.e. a fuel tank 22, or, as shown here, is fed by a primary (low pressure) fuel pump.

The reciprocating pressure pump 14 and specifically its spring loaded plunger 23 is driven by a schematically illustrated engine driven camshaft 24 and takes in liquid (gasoline) from the tank 22 via the liquid supply line 18 through the inlet valve 16 and delivers it under pressure through an outlet valve 26 to a common rail 32 or other reservoir which feeds the fuel injectors 28. The delivery pressure can be, for example, 200bar.

For multi-cylinder engines a corresponding plurality of fuel injectors 28 is required. As mentioned above the plunger 23 of the reciprocating pressure pump (here a single plunger pump) is driven by an engine driven camshaft 24. The camshaft is rotatably coupled to the variable speed internal combustion engine.12, for example by a belt drive 25. The common rail 32 includes a pressure limiting valve 33 which prevents excess fuel pressure by feeding the excess fuel to a return line 29 leading to the fuel tank 22. The individually controlled fuel injectors 28 receive fuel at the rail pressure from the common rail 32 and are each separately controlled in known manner to inject the desired amount of fuel into each cylinder of the engine 12 for each combustion cycle, or into the inlet tract for each cylinder.

Any conventional reciprocating piston pump 14 can be used to feed fuel to the common rail 32. For example the pump could be a Delphi GDi High Pressure Pump (with the cylindrical damper unit removed and the body of the pump connecting directly to the liquid supply line). Since the pump is not actually part of the invention it will not be described in particular detail.

Direct gasoline injection into each cylinder of the engine (as distinct from injection of the fuel into the inlet tract) is referred to as gasoline direct injection. The injectors may be controlled electromagnetically or piezo-electrically. The electrical control lines 35 are schematically illustrated in Fig. 1. Hydraulic control or control via engine oil pressure is also known. Moreover, a plurality of distinct fuel injection pulses may be made for each combustion cycle of the engine. With this type of common rail fuel system excess fuel from the injectors 28, which is used for cooling and lubrication thereof, is returned to the return line 29 via lines 37.

In addition to possible uses with a gasoline fuel system the liquid delivery system of the present invention can also be used with diesel fuel. This type of fuel system runs at higher pressures typically up to 3000 bar. The applicants currently use a pressure of 2000 bar. This high pressure is generally achieved by using a primary pump 34 and a reciprocating piston pump 14 in series in the liquid supply line. For this type of fue,I use can again be made of a common rail 32 feeding individually controlled injectors. Alternatively, the high pressure reciprocating pump 14 can feed fuel directly into flow passages in the engine (not shown), from which the individual injectors receive fuel. The individual injectors are again controlled to inject the required amount of fuel in the required pulses into the combustion space. The return fuel from the injectors, which also serves a lubricating and cooling function, is fed into return passages of the engine (also not shown) and from there via a return line (again not shown) into the fuel tank.

Irrespective of which of the above described types of liquid delivery system is used the damping arrangement of the present invention can be incorporated into the fuel supply line 18 leading to the reciprocating pressure pump.

Some examples of possible cross sectional parts of the elongate part of the liquid supply line will now be given with reference to the further figures.

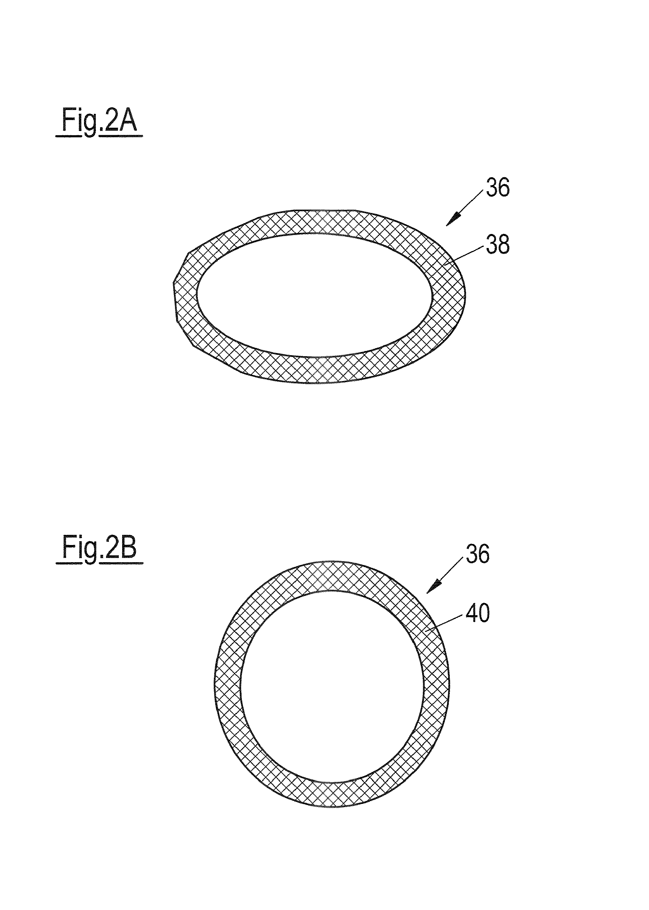

In Fig. 2A the liquid supply line 18 includes an elongate part 36 (see also Fig. 1) which has an initial elliptical cross sectional shape 38. In this embodiment the elliptical cross sectional shape thus differs from a circular cross section. When the reciprocating pump 14 operates, the opening and closing of the inlet valve 16 repeatedly starts and stops the flow of fuel through the liquid supply line 18 and thus through the elongate part 36. The fuel in the liquid supply line 18 and in the elongate part 36 has inertia and the starting and stopping of the fuel flow causes pressure fluctuations. The presence of the elongate part with the initial cross sectional state differing from a circular cross section forms a fuel damper.

The fuel damping effect is achieved because the pressure rise in the elongate part due to shutting of the inlet valve (akin to water hammer) results in a change of the cross-sectional shape to one more closely representing a circular cross section 40 as shown in Fig. 2B. This change in cross sectional shape corresponds to an increase in the cross sectional are of the elongate part 36 and thus to an increase of its volume (length x cross sectional area). This resilient increase in volume reduces the peak amplitude of the pressure wave, i.e. attenuates it. This increase in area attributable to change of cross sectional shape is in addition to any increase in area that might occur due to the limited expansion of the elongate part 36. As the pressure wave is effectively attenuated by the increase in volume any pressure reductions at the inlet valve that may result from pressure waves travelling down the liquid supply line and being reflected at the open end of the liquid supply line, or at any other optional items built into the liquid supply line are minimized. Such items can include the filter 42 and the solenoid operated accident cutoff valve 44 shown as dashed line boxes in Fig. 1. If a primary pump 34 is provided it can also cause reflections of a pressure wave, such reflections can occur at open or closed ends of fuel line, there is simply a difference in phase of the reflected wave.

It will be understood that the initial cross sectional shape of the elongate part 36 will be understood to mean its cross sectional state with no flow through the liquid supply line or the elongate part or with only a steady state operating pressure without superimposed pressure fluctuations. The term "more closely approximating a circular state" will be understood to mean that the cross section is not necessarily circular but more circular than in the initial state and thus of larger area than in the initial state. The degree of circularity attained depends on the amplitude of the pressure fluctuations that may occur.

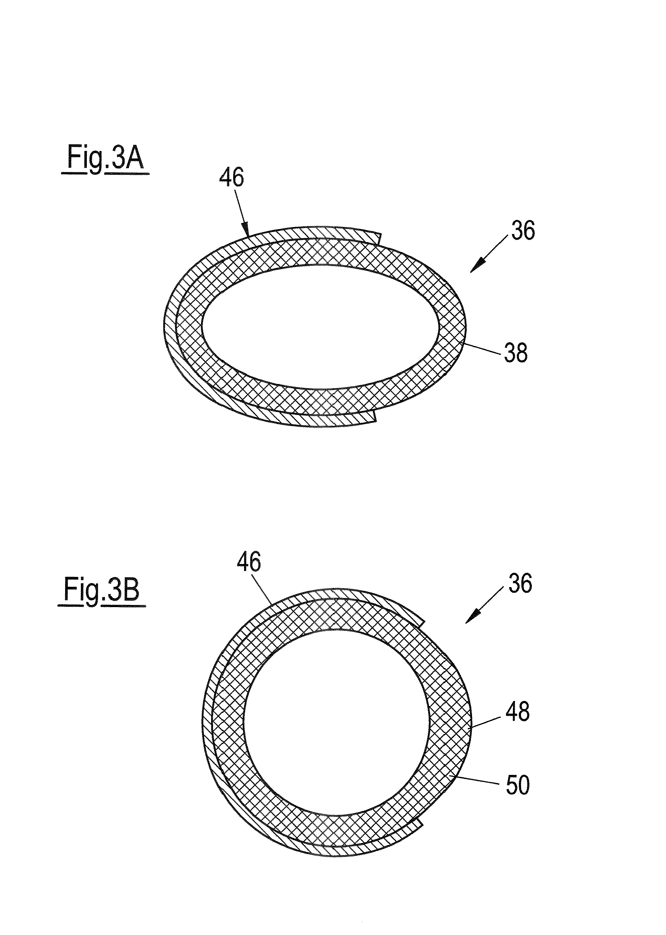

Fig. 3A shows an alternative arrangement in which the part of the liquid supply line having a cross sectional shape 38 (here again an elliptical shape) differing from a circular shape is accommodated in a resilient holder 46 or clip adapted to increase the elastic loading of the part and thus its resistance to deformation from the initial state. The holder or clip 46 may be made of metal or plastic and may extend over part of the length of the elongate part or over its full length. The holder or clip 46 may also be adapted to clip the elongate part in place in the engine bay or elsewhere in the vehicle. Since the elongate part is not additionally supported in the region 48 outside of the generally U-shaped holder 46 it may tend to bulge there as shown at 50 in the more nearly circular cross sectional state shown in Fig. 3B in which the holder 46 has also been resiliently expanded to a generally part circular cross sectional form.

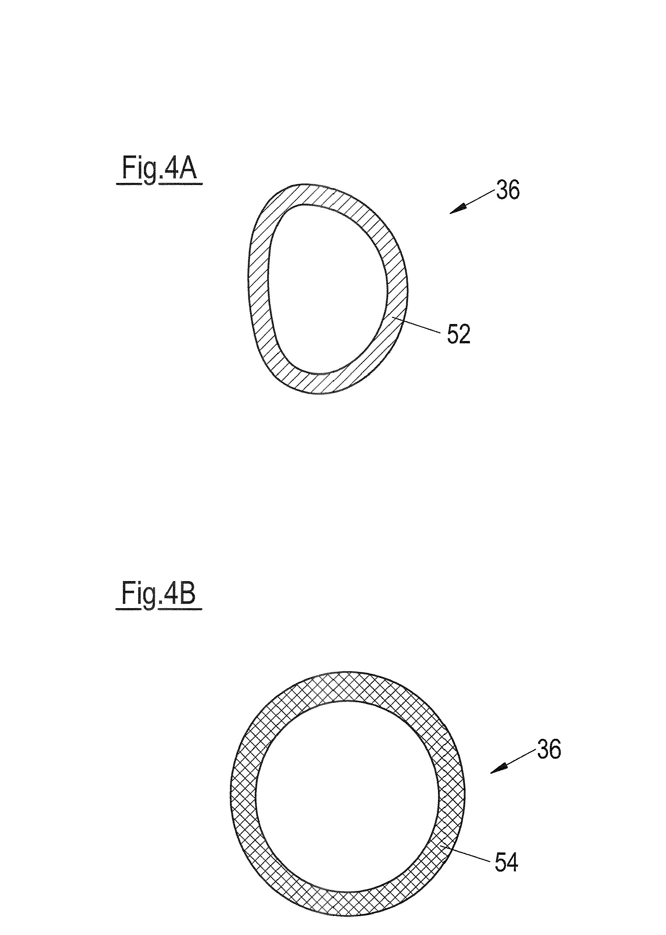

As a further alternative Figs. 4A and 4B respectively show a D-shaped cross section 52 for the initial cross sectional shape of the elongate part, as well as the more nearly circular cross section 54 of larger area in the presence of a pressure increase.

The liquid supply line 18 in the above embodiments, or at least the elongate parts 36 thereof is made of nylon such as nylon 66.

## Claims

1. A liquid delivery system, in particular a fuel delivery system (10), the delivery system including a reciprocating pressure pump (14) having an inlet valve (16) connected to a liquid supply line (18), the reciprocating pump (14) being adapted to take in liquid from the liquid supply line through the inlet valve (16) and deliver it under pressure through an outlet valve (26), **characterized in that** at least an elongate part (36) of the liquid supply line (18) has an initial cross sectional shape (38; 52) which differs from a circular cross section, the elongate part being adapted to change its cross sectional shape and thereby increase in cross-sectional area when liquid present therein is subjected to pressure peaks resulting from operation of the reciprocating pressure pump (14).

2. A liquid delivery system in accordance with claim 1, wherein the reciprocating pressure pump (14) is one of a single plunger pump, a twin plunger pump, a multi-plunger pump and a rotary piston pump.

3. A liquid delivery system in accordance with claim 1 or claim 2 in which the reciprocating piston pump feeds a common rail fuel system or other fuel reservoir.

4. A liquid delivery system in accordance with any one of the preceding claims wherein a plunger (23) of the reciprocating pressure pump (14) is driven by a drive cam (24) driven at a variable speed internal combustion engine (12).

5. A liquid delivery system in accordance with any one of the preceding claims and having a liquid storage tank (22) to which the liquid supply line (18) is connected, the liquid supply line optionally containing at least one of a filter, an accident cut-off valve and an inlet metering valve.

6. A liquid delivery system in accordance with claim 5 in which the liquid supply line (18) has an open inlet end in the liquid storage tank (22).

7. A liquid delivery system in accordance with claim 5 and having a primary pump (34) provided, for example, in or at said liquid storage tank (22) and adapted to supply fuel to said liquid supply line.

8. A liquid delivery system in accordance with any one of the preceding claims in which at least one of a filter (44) and a cut-off valve (22) are incorporated in said liquid supply line (18).

9. A liquid delivery system in accordance with any one of the preceding claims in which at least one of a spill valve(11) and a pressure restricting valve (33) is associated with the reciprocating pressure pump (14) for returning excess liquid to the liquid storage tank (22).

10. A liquid delivery system in accordance with any one of the preceding claims in which the initial cross sectional shape (38; 52) of the elongate part (36) of the liquid supply line (18) is one of elliptical (38) and D-shaped (48).

11. A liquid delivery system in accordance with any one of the preceding claims in which the elongate part (36) of the liquid supply line (18) having a cross sectional shape (38) differing from a circular shape (40) is accommodated in a resilient holder (46) or clip adapted to increase the elastic loading of the part (36) and thus its resistance to deformation from the initial state..

12. A liquid delivery system in accordance with any one of the preceding claims in which the elongate part (36) of the liquid supply line is resilient and comprises, for example, a rubber material, a synthetic rubber material, a plastic material such as nylon, any of the foregoing being molded to the desired initial cross sectional shape and/or including reinforcing fibers, filaments, fabrics or braids, and a metal material such as steel.

13. A liquid delivery system in accordance with any one of the preceding claims in which said elongate part (36) of said liquid supply line (18) has a length between 100mm and 4000mm or greater.

14. A liquid supply line 18) or return line (29), in particular adapted for use in a liquid delivery system (10) in accordance with any one of the preceding claims, wherein at least an elongate part (36) of the liquid supply line (18) and/or return line (29) has an initial cross sectional shape (38; 52) which differs from a circular cross section (40), the elongate part being adapted to change its cross sectional shape and thereby increase in cross-sectional area when liquid present therein is subjected to pressure peaks resulting for example from operation of the reciprocating pressure pump (14).

15. A motor vehicle including a liquid delivery system (10) in accordance with any one of the preceding claims 1 to 13.
